Europäisches Patentamt

European Patent Office

Office européen des brevets

(11) Publication number: **0 287 138 B1**

# EUROPEAN PATENT SPECIFICATION

(45) Date of publication of patent specification:
28.08.91 Bulletin 91/35

(51) Int. Cl.⁵: **C09C 1/56, C09C 3/10,**
**C08K 3/04, C09K 3/16**

(21) Application number: 88200448.4

(22) Date of filing: 09.03.88

(54) **Non-dusting, electrically conductive carbon black, a process for the preparation thereof and synthetic compositions containing this carbon black.**

(30) Priority: 26.03.87 NL 8700702

(43) Date of publication of application:
19.10.88 Bulletin 88/42

(45) Publication of the grant of the patent:
28.08.91 Bulletin 91/35

(84) Designated Contracting States:
DE GB NL

(56) References cited:
EP-A- 0 084 645

(73) Proprietor: AKZO N.V.
Velperweg 76
NL-6824 BM Arnhem (NL)

(72) Inventor: Verlaan, Johannes Petrus Jozef
Keurkampstraat 22
NL-7415 DL Deventer (NL)

(74) Representative: Sieders, René et al
AKZO N.V. Patent Department (Dept. CO) P.O.
Box 9300
NL-6800 SB Arnhem (NL)

## Description

The invention relates to an electrically well-conducting carbon black, to a process for the preparation of such a carbon black and to anti-static and/or electrically conductive synthetic compositions containing such a carbon black.

The use of electrically conductive carbon black to render rubber anti-static is described, among other places, in DE 2515632 and DE 2613126.

From German Patent Specification No. 2515632 a method is known for rendering synthetic materials anti-static by incorporating therein 4-12% by weight of an electrically conductive carbon black which is prepared in the following way :

— the carbon black-containing reaction gases released in the combustion of hydrocarbons are washed with water ;

— the resulting carbon black suspension is treated with a liquid hydrocarbon ;

— the carbon black concentrated in this way is freed of the hydrocarbon, and

— finally, the carbon black is subjected to a thermal after treatment at 200°-2200°C.

More particularly, the use of this type of carbon black in polyethylene, polypropylene, polyvinyl chloride or polystyrene is described.

From German Patent Specification 2613126 a process is known for rendering rubber anti-static by mixing rubber, and possibly some other additives, with electrically conductive carbon black, in an amount of 5-40% by weight and preferably 10-20% by weight, calculated on the amount of rubber, followed by moulding and vulcanization, use being made of electrically conductive carbon black prepared by subjecting the carbon black-containing gases released in the thermal conversion of hydrocarbons to a washing treatment with water ; vigorously stirring the resulting carbon black suspension at 5°-120°C in the presence of a volatile, liquid (cyclo)aliphatic hydrocarbon ; isolating the carbon black from the liquid phase, freeing it of hydrocarbon by heating and finally heating it to 200°-2200°C.

From Research Disclosure 13634 there are also known electrically conductive rubbers containing 2-40% by weight of conductive carbon black (marketed under the name of Ketjenblack EC).

From German Offenlegungsschrift No. 3151753 a process is known wherein at least a pigment, e.g. carbon black (p. 5, line 24, p. 9, Example 2) is mixed with an aqueous solution of a polymer composed of a reaction product of an amine with ethylene oxide and propylene oxide, in order to dedust it. The powdered end product (see e.g. p. 9, Example 2) contains 70-95% of pigment ; and 5-30% of polymer. And an anti-foaming agent may also be added (p. 1, claim 1).

From U.S. Patent Specification 4264552 a process is known wherein in a fluidized bed a pigment is mixed with a granulating assistant and water. Preferred embodiments thereof include :

a. spraying the granulating assistant and water onto the fluidized bed of pigment ;

b. incorporating all or part of the granulating assistant into the pigment prior to fluidization and spraying with water, or water mixed with the remaining granulating assistant.

The granulating assistant may be used as a solution, an emulsion or a dispersion in water. Although carbon black is mentioned in the description of the invention (p. 2, line 9), no actual use is made of it in any of the embodiments.

From Soviet Patent Specification No. 1114685 (Derwent Abstract No. 85-097202/16) a process is known which comprises mixing carbon black dust with an aqueous solution of a polymeric complex of polyacrylic acid (I) and caprolactam (II) in a ratio of 0,5-1,0 : 1,0.

The polymeric additive is added to the carbon black in an amount of 0,1-2,5% by weight. The modified carbon black could be used as a filler in the tyre industry. However, of this carbon black only the parameter values with regard to its favourable electrical insulating properties are mentioned.

All carbon black preparations obtained according to the previously discussed prior art have the disadvantage that the electrical conductivity in combination with the mechanical properties of the synthetic compositions obtained after processing has proved insufficient for the present applications.

Therefore, there is still a great need for a non-dusting, free-flowing, non-clotting carbon black agglomerate displaying good dispersibility in technically applicable synthetic and/or rubber compositions, with the compositions moreover showing favourable electrical conductivity in combination with the desired favourable mechanical properties.

Surprisingly, as a result of extensive research, such desired carbon black agglomerates have now been found, characterized in that they contain 5-25% by weight of a water soluble polymer composed of alkali metal —or substituted or unsubstituted ammonium— or free acid derivatives of a partially esterified α-olefin-unsatu-

2

rated polycarboxylic acid copolymer, with the α-olefin containing 6 to 40 carbon atoms and at least 80% by weight of the non-esterified copolymer having a molecular weight of 1000 to 100000, and in that they contain 95-75% by weight of carbon black, said carbon black agglomerates having a BET (Brunauer, Emmett and Teller) surface area ≥ 250 m²/g, a DBP (Dibutyl phthalate) abs. > 100 cm³/100 g, a wear resistance of < 0,4% (as measured in accordance with the Roche wear resistance test) and a Heubach dust content ≤ 0,55%.

By the expression "alkali metal — or substituted or unsubstituted ammonium — or free acid derivatives of a partially esterified α-olefin-unsaturated polycarboxylic acid copolymer" used here is meant a partially esterified α-olefin-unsaturated polycarboxylic acid copolymer wherein the non-esterified carboxylic acid groups are free, i.e., not neutralized at all, are partly or wholly neutralized or even overneutralized using alkali metal bases, ammonia or amines or more particularly alkanolamines.

The agglomerates according to the invention generally contain 0-5 wt.% and preferably 0 to 1 wt.% of water.

As examples of starting acids or derivatives to be used for the partially esterified α-olefin-unsaturated polycarboxylic acid may be mentioned : cis-unsaturated or trans-unsaturated ethylene dicarboxylic acids such as maleic acid, 2-methylmaleic acid, 2-chloromaleic acid, fumaric acid, itaconic acid, mesaconic acid, citraconic acid, aconitic acid and/or anhydrides and/or monoesters of such acids, or mixtures of these acids or their derivatives.

The α-olefin used to prepare the copolymer contains 6-40 carbon atoms and preferably 10-24 carbon atoms. In most cases the α-olefins used are mixtures of for the most part linear aliphatic hydrocarbons and preferably without substituents.

The α-olefin to polycarboxylic acid units ratio in the copolymer is preferably in the range of 1 : 2 to 2 : 1.

Such α-olefin-unsaturated polycarboxylic acid copolymers and their metal salts have been described, among other places, in published European Patent Application 0181037, but it will be clear that the favourable properties of the carbon black agglomerate according to the invention could in no way either be predicted or expected by a skilled person on the basis of what was disclosed in EP 0181037.

Preferably use is made of a derivative of a partially esterified α-olefin ethylene dicarboxylic acid copolymer, more particularly of a copolymer formed from an α-olefin and maleic anhydride.

The non-esterified copolymer has an average molecular weight of 1000 to 100,000, and preferably 2000 to 30000.

Preferably use is made of polymer compositions wherein the α-olefin contains 10-24 carbon atoms and the alcohol used for partial esterification contains 1-40 carbon atoms. Still more preferably the alcohol should contain 4-18 carbon atoms or be composed of a polyalkylene oxide glycol ether such as, e.g., polyethylene glycol methyl ether.

As a preferred polyalkylene oxide glycol ether to be used may be mentioned a polyethylene oxide glycol ether having 1-30 ethylene oxide units, and more particularly 1-12 ethylene oxide units.

Partial esterification of the α-olefin polycarboxylic acid copolymer is obtained by reacting this copolymer with an alcohol in an amount of 0,5-1,5 equivalents and more particularly of 0,8-1,2 equivalents.

Neutralization or overneutralization of the free carboxylic groups in the copolymers preferably is carried out with sodium hydroxide or dimethyl ethanolamine.

As examples of water soluble copolymers preferably used for the preparation of carbon black agglomerate according to the invention may be mentioned the commercial preparations Dapral® GE 202, Dapral® GE 204 NA, Dapral® GE 205 DMA and Dapral® GE 206 DMA which are substantially composed of, respectively :

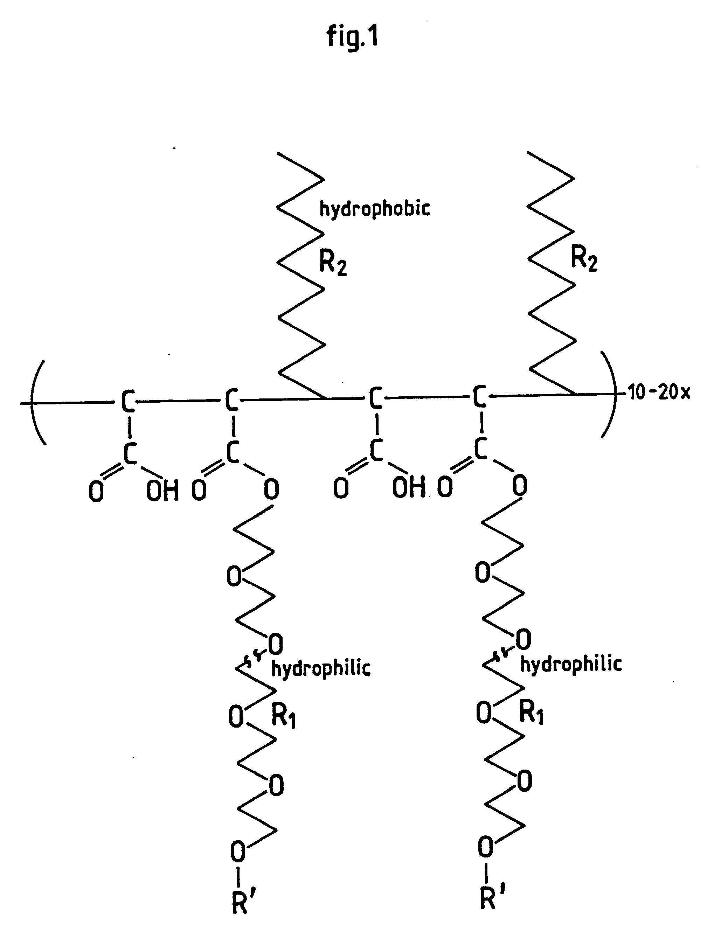

— a partial ester of a branched α-olefin-unsaturated carboxylic acid copolymer with an average molecular weight of 20000, containing hydrophobic alkyl branches ($R_2$) and hydrophilic ester and ether groups ($R_1$) of the formula in Fig. 1

— the sodium salt thereof at pH 7

— the stoichiometric dimethyl ethanolamine salt thereof, and

— the salt obtained by reaction of the basic acid with 2,5 moles of dimethyl ethanolamine/mole of basic acid.

The carbon black component of the agglomerates according to the invention may in principle consist of any kind of carbon black formed for instance under conditions of incomplete combustion of hydrocarbons such as natural gas, refinery gas, liquid hydrocarbon fractions and acetylene.

More generally, both ordinary electrically conductive carbon blacks (acetylene carbon black, P type carbon black) having a BET value of 60-500 m²/g and a DBP of 100-350 cm³/100 g, and electrically well-conducting carbon blacks having a BET value > 500 m²/g and a DBP > 200 cm³/100 g are suitable to be used.

Carbon black agglomerates according to the invention may be prepared by a process comprising the successive steps of :

— mixing carbon black which has or has not been wetted with water using an aqueous or non-aqueous solution of one or more of said copolymers in a predetermined amount ;

— drying the resulting product to the air and/or under vacuum, at elevated or non-elevated temperature to the desired water content.

Mixing is preferably carried out in such a way that the mixture will remain dry, i.e. that all the water will be absorbed by the carbon black, and the carbon black particles will combine with the polymer.

According to one of the preferable practical embodiments of the preparative process a wet carbon black filter cake is dried to a carbon black preparation, the particle size of which follows a Gauss distribution, and which is mixed with one or more of the afore-described copolymers in aqueous solution, after which the resulting mixture is dried to the desired moisture level, with particles of a particle size according to a Gauss distribution (particle size : 0,1-2 mm).

According to an alternative preferable practical embodiment of the preparative process of the carbon black agglomerate according to the invention a wet carbon black filter cake is mixed directly with one or more aforementioned polymers as such or as aqueous solution, and the resulting mixture is then extruded and cut up finely and dried, whereby a fairly uniform particle size is obtained, of preferably 1-5 mm in diameter (depending on the diameter of the die-plate orifice).

According to yet another practical embodiment of the preparative process of the carbon black agglomerate a wet carbon black filter cake is suspended in toluene, whereby pellets are obtained after removal of the toluene by evaporation and thermal after-treatment of the carbon black at 200°-2200°C. These pellets are then treated with one or more of the afore-described copolymers.

It will be clear that another aspect of the invention is constituted by the use of carbon black agglomerate according to the invention in synthetic compositions and in the resulting synthetic compositions.

Carbon black agglomerates according to the invention may be successfully used in those cases where carbon black is used to convert the electrically insulating properties of synthetic materials and rubbers into anti-static and/or electrically conductive properties as a result of a lowering of the electrical resistivity of the final composition or to maintain the desired electrical resistivity by using a significantly lower amount of carbon black per unit weight of synthetic material or rubber.

The carbon black agglomerate according to the invention may generally be used in an amount of 1-25% by weight, based on the weight of the whole composition, and preferably in an amount of 5-15% by weight.

As examples of synthetic materials in which carbon black agglomerate according to the invention can be used may be mentioned :

polyethylene, polypropylene, polybutylene, neoprene, polychloroprene, polyurethane, polyisoprene, polyvinyl chloride, chlorinated polyethylene, polyvinyl chloride-containing copolymers such as polyvinyl chloride-polyvinyl acetate, copolymers made from vinyl chloride and other monomers, such as vinyl acetate, vinylidene chloride or acrylonitrile, polystyrene and polyacrylates, or mixtures thereof.

The invention will be further described in but not limited by the following examples :

## Example 1

Samples of carbon black (Ketjenblack® EC-300 N) were prepared making use of carbon black pellets or wet filter cake and different concentrations (2,5-25% by weight) of copolymer solutions of the Dapral®-GE 206 DMA type. Except for sample h (made from wet filter cake) use was made for all the other samples of Ketjenblack EC-300 N.

The samples were mixed with a low-density polyethylene (LDPE) composition and after extrusion of the mouldings the electrical resistivity and the dispersion were determined.

All tested low-density polyethylene compositions contained 8% by weight of carbon black, based on the weight of the LDPE composition.

The LDPE compositions were prepared in a laboratory Banbury blender (Farrel/Bridge type BR ; 1,6-litre) under the following characteristic working conditions :

| load | 1000 g |
|---|---|
| rotor speed | 114 r.p.m. |
| ram pressure | 3,5 atm. |
| initial temperature | 61°-64°C |
| dump temperature | 130°-133°C |
| mixing sequence | O' load $\frac{1}{2}$ LDPE + Flectol-H® (anti-oxidant) + Ketjenblack® EC + $\frac{1}{2}$ LDPE |

A sheet of about 2 mm thickness was prepared with the aid of a two-roll mill.

| two-roll mill | 150 × 350 mm |
|---|---|

temperature                130°C
friction ratio              1 : 1,2

## Preparation of plaques

Plaques of 2 mm thickness were moulded between Mylar film and high-gloss plates.

moulding temperature        180°C
moulding time               10 minutes at 1 ton pressure
                                1 minute at 15 ton pressure
water cooling              10 minutes at 15 ton pressure

24 hours after moulding electric tests were carried out as listed in the table below and represented in Figure 2. The electrodes were painted with silver paint (L-200 ex Degussa).

## Table 1

| formu-lation | sample no. | Dapral® GE 206 DMA % | Heubach % | wear resis-tance % | Use tested in LDPE | | |
| --- | --- | --- | --- | --- | --- | --- | --- |
| | | | | | carbon black disper-sion 3) | electrical volume resistivity 1) | |
| | | | | | | Mod. DIN 53596 Ohm cm | DIN 53596 Ohm cm |
| (1) | EC-300 N® Block 553 | none | 5,0 | 2,0 | 88,1 85,9 | $3,1 (\pm 0,7) \times 10^3$ | $6,6 (\pm 5,7) \times 10^4$ $1,6 (\pm 0,3) \times 10^5$ |
| (2) | (a) | 2,5 | 0,52 | 0,4 | 87,8 | $1,1 (\pm 0,1) \times 10^3$ | $4,8 (\pm 1,7) \times 10^4$ |
| (3) | (b) | 5,0 | 0,30 | 0,4 | 89,7 | 920 $(\pm 187)$ | $8,9 (\pm 4,5) \times 10^3$ |
| (4) | (c) | 7,5 | 0,50 | 0,4 | 89,1 | 603 $(\pm 166)$ | $6,2 (\pm 5,1) \times 10^3$ |
| (5) | (d) | 10,0 | 0,17 | 0,4 | 91,3 | 464 $(\pm 208)$ | $2,5 (\pm 0,7) \times 10^3$ |
| (6) | (e) | 12,5 | 0,32 | 0,4 | 90,8 | 228 $(\pm 19,7)$ | 717 $(\pm 197)$ |
| (7) | (f) | 15,0 | 0,18 | 0,4 | 91,8 | 218 $(\pm 29,6)$ | 536 $(\pm 160)$ |
| (8) | (g) | 25,0 | 0,14 | 0,4 | 86,8 | 126 $(\pm 5,0)$ | 223 $(\pm 73,5)$ |
| (9) | (h) | 10,0 | 2) | 0,4 | 93,1 | 674 $(\pm 143)$ | $1,6 (\pm 0,1) \times 10^3$ |

1) average value of 4 plaques of every formulation; (...) = standard deviation
2) cannot be measured
3) measured in accordance with ASTM D-2663, method B

Note: Sample (h) was obtained from wet cake, all other samples were obtained from pellets (KBEC-300 N; block 553).

Formulations

| | (1)<br>814 | (2)<br>815 | (3)<br>816 | (4)<br>817 | (5)<br>818 | |
|---|---|---|---|---|---|---|
| BASF<br>Lupolen 1810 H®<br>(LPDE) | 91,50 | 91,30 | 91,10 | 90,85 | 90,60 | |
| Flectol H®<br>(anti-oxidant) | 0,50 | 0,50 | 0,50 | 0,50 | 0,50 | parts<br>by<br>weight |
| Ketjenblack®<br>EC-300 N (block 553) | 8,00 | - | - | - | - | |
| (a) | - | 8,20 | - | - | - | |
| (b) | - | - | 8,40 | - | - | |
| (c) | - | - | . - | 8,65 | - | |
| (d) | - | - | - | - | 8,90 | |

| | 819 | 820 | 821 | 822 | |
|---|---|---|---|---|---|
| Lupolen 1810 H®<br>(LDPE) | 90,35 | 90,10 | 88,85 | 90,60 | |
| Flectol H®<br>(anti-oxidant) | 0,50 | 0,50 | 0,50 | 0,50 | parts by<br>weight |
| (e) | 9,15 | - | - | - | |
| (f) | - | 9,40 | - | - | |
| (g) | - | - | 10,65 | - | |
| (h) | - | - | - | 8,90 | |

## Example 2

For comparison carbon black agglomerates were prepared as described in Example 1, making use of Ketjenblack® EC-300 N pellets and several other Dapral® copolymer compositions as listed in the table below. The electrical resistivities listed in this table were measured on LDPE carbon black agglomerate plaques, which were obtained as described in Example 1 and wherein the carbon black agglomerate content in the composition amounted to 8%, calculated on the weight of the whole composition.

6

## Table 2

| Sample | Type of carbon black treatment | wear resis- tance | side crushing strength of granule (N/cm gran. length) | carbon black (3) dispersion % | electr. volume resistivity DIN 53596 Ohm cm |
|---|---|---|---|---|---|
| (i) | GE 202 10% | 0,4 | 6,5 | 92,7 | $3,2 \ (\pm \ 0,4) \ x \ 10^3$ |
| (j) | GE 205 DMA 10% | 0,8 | 0,8 | 92,2 | $4,7 \ (\pm \ 3,0) \ x \ 10^3$ |
| (k) | toluene pelletized | 2,0 | 18 | 88,1 | $6,6 \ (\pm \ 5,7) \ x \ 10^4$ |
| (1) | directly pre- pared from wet filter cake | 4,0 | cannot be measured | 91,0 | $3,4 \ (\pm \ 1,6) \ x \ 10^6$ |
| (m) | GE 206 DMA 10% | 0,4 | 7,4 | 93,1 | $4,6 \ (\pm \ 7,8) \ x \ 10^5$ |
| (n) | GE 204 NA 10% | 0,4 | 4,0 | 91,2 | $1,5 \ (\pm \ 1,2) \ x \ 10^4$ |

3)  measured in accordance with ASTM D-2663, method B

## Example 3

For comparison carbon black agglomerates were prepared as described in Example 1, making use of Ketjenblack® EC-300 N in the form of wet filter cake and polyethylene imine (Polymin® P) as a 10%-solution (mentioned in German Offenlegungsschrift No. 3151753). [Sample O]

Electrical volume resistivity was measured on LDPE-carbon black agglomerate plaques obtained by the process described in Example 1, wherein the carbon black agglomerate content in the composition amounted to 8%, calculated on the weight of the whole composition.

The relevant parameters are given in the table below.

## Table 3

### KBEC, pre-treated with PE-imine 10% (Polymin® P)

| | |
|---|---|
| LDPE 1810 H | 90,6 |
| Flectol H® | 0,5 |
| KBEC 300 N | - |
| Sample 0 | 8,9 |
| Wear resistance % | 0,8 |
| Side crushing strength (N/cm gran. length) | 23 ($\pm$ 5,5) |

Electrical volume resistivity

| | |
|---|---|
| DIN 53596, (Ohm.cm) | $> 10^{11}$ |
| Carbon black dispersion (%) | 87,4 |

**Claims**

1. A non-dusting, electrically conductive carbon black composed of carbon black agglomerates, characterized in that they contain 5-25% by weight of a water soluble polymer composed of alkali metal — or substituted or unsubstituted ammonium — or free acid derivatives of a partially esterified α-olefin-unsaturated polycarboxylic acid copolymer obtained by reacting with an alcohol in an amount of 0.5-1.5 equivalents, with the α-olefin containing 6 to 40 carbon atoms and at least 80% by weight of the non-esterified copolymer having a molecular weight of 1000 to 100000, and in that they contain 95-75% by weight of carbon black, said carbon black agglomerates having a BET (Brunauer, Emmett and Teller) surface area ≥ 250 m²/g, a DBP (dibutyl phthalate) abs. > 100 cm³/100 g, a wear resistance of < 0,4% (as measured according to the Roche wear resistance test), and a Heubach dust content ≤ 0,55%.

2. A non-dusting, electrically conductive carbon black according to claim 1, characterized in that the used partially esterified α-olefin-unsaturated polycarboxylic acid copolymer is derived from cis-unsaturated or trans-unsaturated ethylene dicarboxylic acids and/or anhydrides and/or monoesters of such acids.

3. A non-dusting, electrically conductive carbon black according to claims 1 or 2, characterized in that in the copolymer used the α-olefin to polycarboxylic acid ratio is in the range of 1 : 2 to 2 : 1.

4. A non-dusting, electrically conductive carbon black according to any one of claims 1-3, characterized in that the α-olefin polycarboxylic acid copolymer is partially esterified with a polyalkylene oxide glycol ether, preferably polyethylene glycol methyl ether.

5. A non-dusting, electrically conductive carbon black according to any one of claims 1-4, characterized in that the free carboxyl groups are neutralized or overneutralized with sodium hydroxide or dimethyl ethanolamine.

6. A process for the preparation of non-dusting, electrically conductive carbon black according to any one of claims 1-5, comprising the successive steps of : mixing carbon black which has or has not been wetted with water with an aqueous or non-aqueous solution of one or more copolymers in a predetermined amount and drying the resulting product to the air and/or under vacuum, at elevated or non-elevated temperature.

7. A process according to claim 6, characterized in that the carbon black is mixed in such a way that the water present in the carbon black-copolymers mixture will be absorbed almost completely by the carbon black.

8. Anti-static and/or electrically conductive carbon black-containing synthetic compositions, characterized in that they contain 1-25% by weight, calculated on the whole composition, of non-dusting, electrically conductive carbon black according to any one of claims 1-5.

9. Shaped products prepared by methods commonly employed for this purpose from anti-static and/or electrically conductive synthetic compositions according to claim 8.

**Patentansprüche**

1. Nichtstaubender, elektrisch leitfähiger Russ aus Russagglomeraten, dadurch gekennzeichnet, dass sie enthalten : 5-25 Gew.% eines wasserlöslichen Polymers, das ein Alkalimetall-, ein substituiertes oder unsubstituiertes Ammonium- oder freies Säurederivat eines partiell veresterten α-olefinisch ungesättigten Polycarbonsäurecopolymers, erhalten durch Reaktion mit einem Alkohol in einer Menge von 0,5-1,5 Aequivalente, wobei das α-Olefin 6 bis 40 Kohlenstoffatome enthält und mindestens 80 Gew.% des unveresterten Copolymers ein Molekulargewicht von 1000 bis 100.000 haben, und dadurch, dass sie 95-75 Gew.% Russ enthalten, wobei die Russagglomerate eine BET (Brunauer, Emmett und Teller) Oberfläche ≥ 250 m²/g, ein DBP (Dibutylphthalat) abs. > 100 cm³/100 g, eine Abriebbeständigkeit von < 0,4% (gemessen nach dem Roche-Abriebbeständigkeitstest), und einen Heubach-Staubgehalt von ≤ 0,55% haben.

2. Nichtstaubender, elektrisch leitfähiger Russ nach Anspruch 1, dadurch gekennzeichnet, dass das verwendete teilveresterte α-olefinisch ungesättigte Polycarbonsäurecopolymer von cis-ungesättigten oder trans-ungesättigten Etylendicarbonsäuren und/oder Anhydriden und/oder Monoestern solcher Säuren abgeleitet ist.

3. Nichtstaubender, elektrisch leitfähiger Russ nach den Ansprüchen 1 oder 2, dadurch gekennzeichnet, dass in dem verwendeten Copolymer das Verhältnis von α-Olefin zur Polycarbonsäure im Bereich von 1 : 2 bis 2 : 1 liegt.

4. Nichtstaubender, elektrisch leitfähiger Russ nach einem der Ansprüche 1 bis 3, dadurch gekennzeichnet, dass das α-olefinische Polycarbonsäurecopolymer teilweise mit einem Polyalkylenoxydglycolether, vorzugsweise mit Polyethylenoxydglycolmethylether verestert ist.

5. Nichtstaubender, elektrisch leitfähiger Russ nach einem der Ansprüche 1 bis 4, dadurch gekennzeichnet, dass die freien Carbonsäuregruppen mit Natriumhydroxid oder Dimethylethanolamin neutralisiert oder überneutralisiert sind.

6. Verfahren zur Herstellung von nichtstaubendendem, elektrisch leitfähigem Russ nach einem der Ansprüche 1 bis 5 mit der Verfahrensschrittfolge : Vermischen von Russ, der gegebenenfalls mit Wasser benetzt ist, mit einer wässrigen oder nichtwässrigen Lösung von einem oder mehreren Copolymer(en) in vorbestimmten Anteilen, und Trocknen des resultierenden Produktes an der Luft und/oder vermindertem Druck bei erhöhter oder nicht erhöhter Temperatur.

7. Verfahren nach Anspruch 6, dadurch gekennzeichnet, dass der Russ in solcher Weise vermischt wird, dass das in der Mischung aus Russ und Copolymer vorhandene Wasser nahezu vollständig von dem Russ absorbiert wird.

8. Kunststoffzubereitungen, die antistatischen und/oder elektrisch leitfähigen Russ enthalten, dadurch gekennzeichnet, dass sie 1-25 Gew.%, berechnet auf die gesamte Zubereitung, nichtstaubenden, elektrisch leitfähigen Russ nach einem der Ansprüche 1 bis 5 enthalten.

9. Formteile, hergestellt nach den hierfür an sich üblichen Verfahren, aus antistatischen und/oder elektrisch leitfähigen Kunststoffzubereitungen gemäss Anspruch 8.

**Revendications**

1. Un noir de carbone non poussiéreux et conducteur composé d'agglomérats de noir de carbone, caractérisé en ce qu'ils contiennent de 5 à 25% en poids d'un polymère hydrosoluble composé de dérivés acides libres ou métalliques alcalins — ou d'ammonium substitué ou non substitué — d'un copolymère acide polycarboxylique insaturé/α-oléfine partiellement estérifiée obtenu par réaction avec un alcool selon des proportions de 0,5 à 1,5 équivalents, l'α-oléfine contenant de 6 à 40 atomes de carbone et au moins 80% en poids du copolymère non estérifié présentant un poids moléculaire de 1000 à 100000, et en ce qu'ils contiennent 95 à 75% en poids de noir de carbone, lesdits agglomérats de noir de carbone présentant une aire interfaciale BET (Brunauer, Emmett et Teller) supérieure ou égale à 250 m²/g, une absorption du phtalate de dibutyle supérieure à 100 cm³/100 g, une résistance à l'usure inférieure à 0,4% (telle que mesurée selon le test de résistance à l'usure de Roche), et une teneur en poussières selon la méthode de Heubach inférieure ou égale à 0,55%.

2. Le noir de carbone non poussiéreux et conducteur selon la revendication 1, caractérisé en ce que le copolymère acide polycarboxylique insaturé/α-oléfine partiellement estérifiée utilisé est dérivé d'acides éthylènedicarboxylique cis ou trans insaturés et/ou des anhydrides et/ou des monoesters desdits acides.

3. Le noir de carbone non poussiéreux et conducteur selon l'une des revendications 1 ou 2, caractérisé en ce que le rapport α-oléfine/acide polycarboxylique dans le copolymère est de 1/2 à 2/1.

4. Le noir de carbone non poussiéreux et conducteur selon l'une quelconque des revendications 1 à 3, caractérisé en ce que le copolymère acide polycarboxylique/α-oléfine est partiellement estérifié avec un oxyde de polyalkylène glycoléther, de préférence du polyéthylèneglycol méthyléther.

5. Le noir de carbone non poussiéreux et conducteur selon l'une quelconque des revendications 1 à 4, caractérisé en ce que les groupes carboxyles libres sont neutralisés ou surneutralisés avec de l'hydroxyde de sodium ou de la diméthyléthanolamine.

6. Un procédé de préparation d'un noir de carbone non poussiéreux et conducteur selon l'une quelconque des revendications 1 à 5, comprenant les étapes successives de mélange de noir de carbone, humidifié ou non avec de l'eau, avec une solution aqueuse ou non aqueuse d'un ou de plusieurs copolymères employés en une proportion prédéterminée et de séchage du produit résultant à l'air et/ou sous vide, à température élevée ou non élevée.

7. Le procédé selon la revendication 6, caractérisé en ce que le noir de carbone est mélangé de telle façon que l'eau présente dans le mélange noir de carbone/copolymères est absorbée presque complètement par le noir de carbone.

8. Compositions de synthèse antistatiques et/ou conductrices contenant du noir de carbone, caractérisées en ce qu'elles contiennent de 1 à 25% en poids, par rapport au poids de la composition totale, de noir de carbone non poussiéreux et conducteur selon l'une quelconque des revendications 1 à 5.

9. Produits finis préparés par des méthodes communément employées à cette fin, à partir des compositions antistatiques et/ou conductrices obtenues par synthèse selon la revendication 8.

# fig.1